Europäisches Patentamt

European Patent Office

Office européen des brevets

(19)

(11) **EP 1 139 659 A2**

(12) **EUROPEAN PATENT APPLICATION**

(43) Date of publication:
**04.10.2001 Bulletin 2001/40**

(51) Int Cl.$^7$: **H04N 5/44**

(21) Application number: **01302253.8**

(22) Date of filing: **12.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.03.2000 US 192294 P
16.01.2001 US 760924**

(71) Applicant: **LUCENT TECHNOLOGIES INC.
Murray Hill, New Jersey 07974-0636 (US)**

(72) Inventors:
- **Jiang, Hong
  Warren, New Jersey 07059 (US)**
- **Matthews, Kim N.
  Watchung, New Jersey 07060 (US)**
- **Primatic, Agesino, Jr.
  Frenchtown, New Jersey 08825 (US)**

(74) Representative:
**Watts, Christopher Malcolm Kelway, Dr. et al
Lucent Technologies (UK) Ltd,
5 Mornington Road
Woodford Green Essex, IG8 0TU (GB)**

(54) **Method and apparatus for deinterlacing video images**

(57) De-interlacing is effected by determining the motion at each missing pixel and, then, interpolating the missing lines to convert an interlaced field to a progressive frame. The interpolation employed for luminance is determined through motion detection. If motion is detected in the image field based interpolation is used and if no motion of the image is detected frame interpolation is used. Specifically, the interpolation is determined by employing a motion metric. The motion metric at a missing pixel is defined by using a prescribed combination of pixel luminance value differences. A spatial median filter is then used to remove objectionable noise from the pixel luminance value differences and to fill in so-called "holes" in the image. Indeed, the spatial median filter can be considered as providing a measure of the overall effect of all pixels that make up the object of the image.

*FIG. 1*

100

EP 1 139 659 A2

## Description

## Technical Field

This invention relates to video images and, more particularly, to the conversion of an interlaced field to a progressive frame.

## Background of the Invention

Arrangements are known for converting interlaced video fields to progressive video frames through interpolation of so-called missing lines. One known arrangement of particular interest is disclosed in U. S. Patent 4,989,090 issued to J.J. Campbell et al. on January 29, 1991. This arrangement includes a video pixel interpolator that generates so-called interpolation pixels from incoming image pixels for use in a television image scan line doubler. The interpolator includes a temporal median filter that generates an interpolation pixel by selecting the median one of a plurality of temporal pixel samples. The reason for using the temporal median filter is so that a switch over from frame interpolation to field interpolation can take place at a higher motion threshold for the pixel. The switch over at a higher motion threshold is necessary in the Campbell et al. apparatus because of a high noise level there are no gaps in the motion values between moving and still pixels. Consequently, it would be difficult to determine whether or not the image at the pixel depicts motion, but for the use of the temporal filter. _Unfortunately, the use of the temporal median filter in the Campbell et al. apparatus has only minor affects in the result. The purpose of using the temporal median filter is to allow the use of field interpolation even during higher motion values so that no objectionable aliases will be caused in the image by frame interpolation. However, at motion values when objectionable aliases would occur, the use of the temporal filter in the Campbell et al. apparatus still yields frame interpolation and, therefore, it does not remove the objectionable aliases.

## Summary of the Invention

These and other problems and limitations of prior de-interlacing arrangements are overcome by determining the motion at each missing pixel and, then, interpolating the missing lines to convert an interlaced field to a progressive frame. The interpolation employed for luminance is determined through motion detection. If motion is detected in the image, field based interpolation is used and if no motion of the image is detected, frame interpolation is used.

Specifically, the interpolation is determined by employing a motion metric. The motion metric at a missing pixel is defined by using a prescribed combination of pixel luminance value differences. A spatial median filter is then used to remove objectionable noise from the pixel luminance value differences and to fill in so-called " "holes" in the image. Indeed, the spatial median filter can be considered as providing a measure of the overall effect of all pixels that make up the object of the image.

In a specific embodiment of the invention, a nine point spatial median filter is used to filter the noise from the pixel luminance value differences while continuing to preserve the motion or the stillness of the image.

In still another embodiment of the invention a look-up table is used to determine a "weight" parameter, i.e., blending factor, for frame based or field based interpolations.

A technical advantage of the invention is that it makes a correct decision regarding the motion state of the image rather than merely providing a so-called "fix" for erroneous decisions.

## Brief Description of the Drawing

    FIG. 1 shows, in simplified block diagram form, details of a de-interlacer in accordance with the invention;

    FIG. 2 graphically illustrates missing lines in interlaced fields useful in describing the invention;

    FIG. 3 is a graphical representation of a number of fields useful in describing taking the luminance differences of pixels;

    FIG. 4 shows, in simplified form, a nine-point spatial median filter that may be employed in practicing the invention; and

    FIG. 5 is a graphical representation of a look up table including weights, i.e., blending factors, that may be used in the interpolation employed in the invention.

## Detailed Description

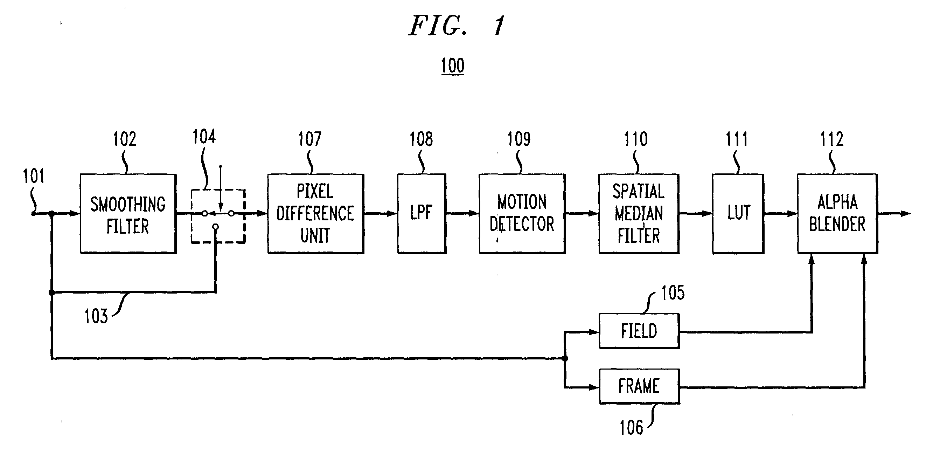

FIG. 1 shows, in simplified block diagram form, details of a de-interlacer in accordance with the invention. The process of de-interlacing is to interpolate missing lines in an interlaced image field.

Specifically, an image to be de-interlaced is supplied to input 101 and, then, to smoothing filter 102, via bypass 103 to a terminal of controllable switch 104, field interpolation unit 105 and frame interpolation unit 106. Smoothing filter 102 is employed to remove or reduce the noise level of the incoming image to remove its adverse effects on a motion metric to be generated and may not be required in all applications of the invention. In this example, a simple 1-2-1 horizontal filter may be used for this purpose. It should be noted that the smoothing filter 102 is employed only to compute the motion metric. After the weights $\alpha$ are computed, as described below, smoothing filter 102 is by-passed via bypass 103 and controllable switch 104, and the subsequent interpolation is done on the original images.

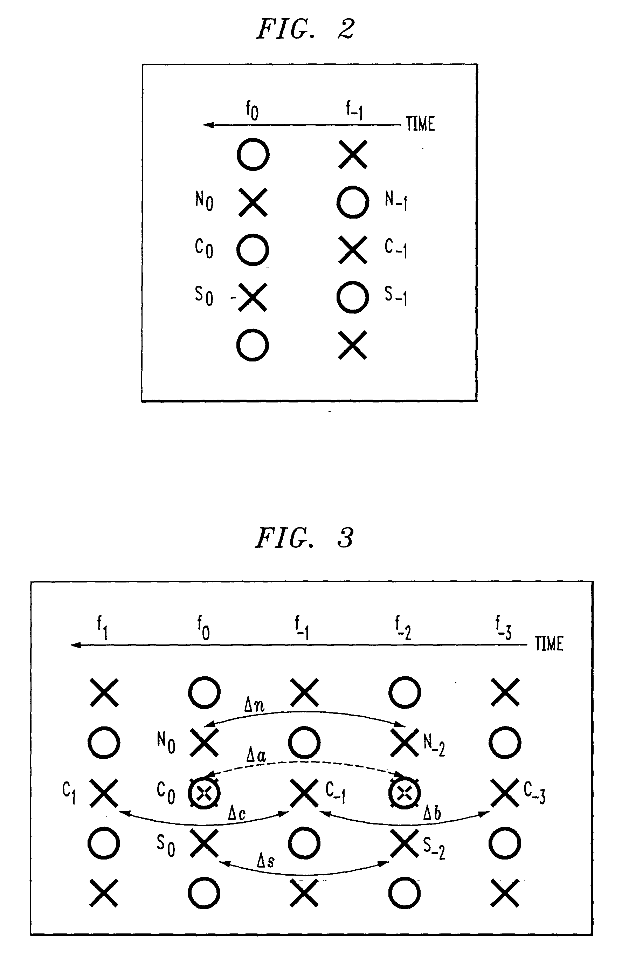

Briefly, FIG. 2 shows two interlaced fields where "X" indicates existing lines and "O" indicates missing lines useful in describing interpolation.

Broadly, interpolation for luminance is effected by using motion detection. If an image is found to be still, frame based interpolation is used. That is, the luminance value of the missing pixel "$C_0$" is taken to be the value at the missing pixel in the early field, namely, $C_0 = C_{-1}$. This is realized in frame interpolation unit 106.

If the image is moving, i.e., has motion, then field-based interpolation is used. That is, the luminance value of the missing pixel "$C_0$" is taken to be the average of the luminance values of pixels in the same field above and below the missing pixel, namely, $C_0 = \frac{(N_0 + S_0)}{2}$. This is realized in field interpolation unit 105.

In general, the motion of an image is characterized by a quantity, i.e., weight or blending factor, $\alpha$, where $0 \leq \alpha \leq 1$, and the interpolation is given by, $C_0 = \alpha \frac{(N_0 + S_0)}{2} + (1-\alpha)C_{-1}$. This is realized in alpha blender 112 in conjunction with a blending factor $\alpha$ from look up table 111 and the above-noted expressions from field interpolation unit 105 and frame interpolation unit 106.

The interpolation of chrominance is always field based.

Motion detection is accomplished by taking the luminance value differences of pixels of prescribed fields via pixel difference unit 107, as shown in FIG. 3. In this example, to determine the motion for a missing pixel, five pixel luminance value differences are obtained by pixel difference unit 107 in accordance with prescribed criteria as follows:

$$\Delta_c = \left| C_1 - C_{-1} \right|;$$

$$\Delta_n = \left| N_0 - N_{-2} \right|;$$

$$\Delta_s = \left| S_0 - S_{-2} \right|;$$

$$\Delta_a = \left| \frac{(N_0 + S_0)}{2} - \frac{N_{-2} + S_{-2}}{2} \right|; \text{ and}$$

$$\Delta_b = \left| C_{-1} - C_{-3} \right|.$$

In the above expressions, $C_1$ represents the luminance value of the corresponding pixel in field $f_1$, $C_0$, $N_0$ and $S_0$ are in field $f_0$, $C_{-1}$ is in field $f_{-1}$, $N_{-2}$ and $S_{-2}$ are in field $f_{-2}$ and $C_{-3}$ is in field $f_{-3}$. It should be noted that only four image fields are used in determining the pixel luminance value differences and, hence, the motion metric $\Delta$.

The desired pixel luminance value differences are low pass filtered via low pass filter 108 to smooth them and the filtered versions are supplied to motion detector 109.

Motion detector 109 actually filters the pixel luminance value differences from pixel difference unit 107 to remove aliases occurring under motion conditions. Moreover, it should be noted that all the pixel luminance value differences noted above might not be used in determining the motion of the missing pixel. The motion metric $\Delta$ at a missing pixel may be defined by employing some combination of the obtained pixel luminance value differences, for example, by

$$\Delta = \max(\Delta_c, \Delta_a).$$

Other combinations of the pixel luminance value differences may also be used to obtain the motion metric at the missing pixel, for example,

$$\Delta = \max(\Delta_c, \min(\Delta_n, \Delta_s)),$$

is employed in motion detector 109 in this implementation. Note that the use of $\min(\Delta_n, \Delta_s)$ reduces the spreading of spurious motion in a vertical direction of the image. It is also important to note that our implementation is significantly simplified because the motion values are computed directly from the pixel luminance value differences employing the minimum and maximum value choices.

The effects of using other examples of combinations of pixel luminance value differences on the quality of images are now briefly discussed. To this end, motion metric $\Delta = \max(\triangle_c, \triangle_a)$ is considered the reference. All the following motion metrics will be compared with it. Indeed, this reference motion metric expression produces satisfactory results for most situations.

Consider motion metric $\Delta = \max(\triangle_c, \triangle_n, \Delta_s)$. This motion metric varies slightly from the reference and produces similar-quality images.

Consider motion metric $\Delta = \max(\Delta_c, \min(\Delta_n, \Delta_s))$. This motion metric has the advantage of preserving very well the edge of a still region in an image. However it produces slightly more aliasing than the reference motion metric.

Consider motion metric $\Delta = \max(\Delta_c, \Delta_n, \Delta_s, \Delta_b)$. This motion metric has the advantage of removing more aliasing. However, disadvantages are that it causes a delayed motion and requires more memory.

Consider motion metric $\triangle = \max(\Delta_n, \Delta_s, \Delta_b)$. In motion metric $\Delta = \max(\Delta_c, \Delta_n, \Delta_s)$, the computation of $\Delta_c$ requires a delay of one field. This delay may cause the images to be out of synchronization with associated audio. Exclusion of $\triangle_c$ avoids this problem. However, disadvantages are also that it causes a delayed motion and requires more memory.

It should be noted that the order of spatial medium filter 110 and look-up table 111 could be exchanged.

In this example, the motion metrics $\Delta$ are computed by motion detector 109, filtered via spatial median filter 110 and, then, a look up table 111 is employed to obtain the weight, i.e., blending factor, $\alpha$ for the frame-based interpolation in frame interpolation unit 106 or field-based interpolation in field interpolation unit 105.

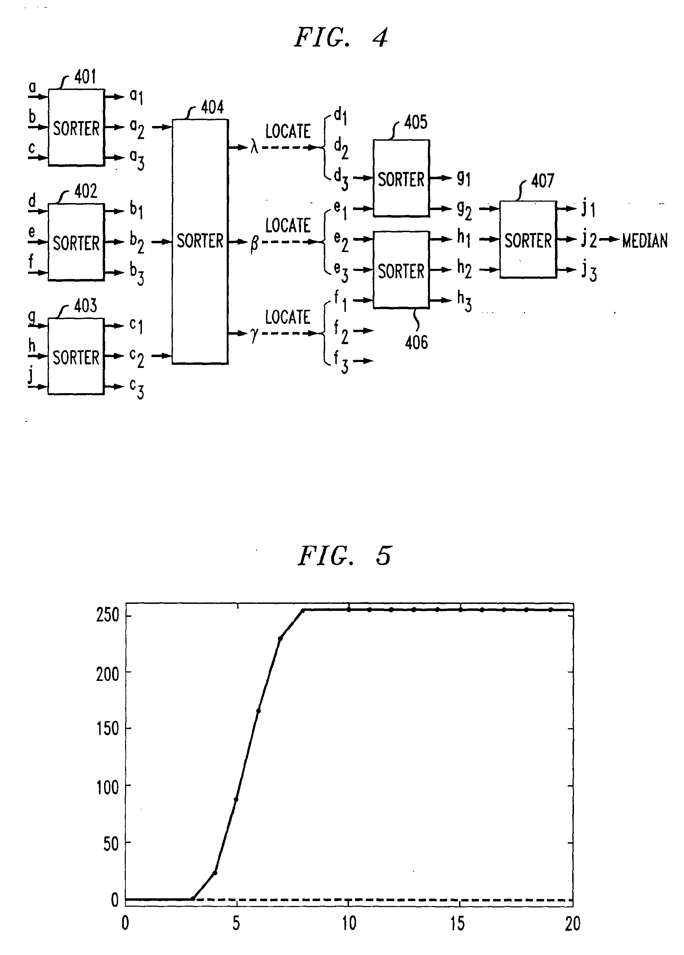

FIG. 4 shows, in simplified form, details of a so-called 9-point spatial median filter 110 that is advantageously used in practicing the invention. It is noted that the pixel luminance value difference is only a measure of the change in a single pixel. However, when considering whether an object in the image is moving or not all pixels of the object should be considered. The spatial median filter 110 can be thought of as measuring the overall effect of all pixels that make up the object. Additionally, since each individual pixel luminance value difference may be prone to random noise, use of spatial median filter 110 can also reduce the effects of the noise.

Referring to FIG. 4, it is seen that the 9-points (i.e., motion metrics $\Delta$) are arranged into three groups of three points each, namely, a first group including motion metrics a, b and c, a second group including motion metrics d, e and f, and a third group including motion metrics g, h and j. The first group is supplied to sorter 401, the second group to sorter 402 and the third group to sorter 403. The motion metric $\Delta$ values are supplied from motion detector 109. Sorters 401, 402 and 403 each perform a complete sort of their respective supplied groups, i.e., arrange the supplied motion metric values in either ascending or descending order. In the spatial median filter shown in FIG. 4 it is assumed that the motion metric values are arranged in ascending order. That is, $a_3 \geq a_2 \geq a_1$ and so on for the other values. Note that a sorter of three values requires three comparisons. Thus, the three sorters 401, 402 and 403 perform nine comparisons. The median of each group is determined to be the middle value motion metric in the sorted group. The three medians from sorters 401, 402 and 403, in this example, are $a_2$, $b_2$ and $c_2$, respectively, and are supplied to sorter 404. In turn, sorter 404 sorts the three medians $a_2$, $b_2$ and $c_2$. This requires another three comparisons. After sorting, the three medians $a_2$, $b_2$ and $c_2$, are assumed to be arranged in ascending order and are designated $\lambda$, $\beta$ and $\gamma$, respectively, where $\lambda \leq \beta \leq \gamma$. Now the nine points of median filter 110 are reduced to five points by removing four points. The remaining five points include the median of the nine points. This reduction is realized by first identifying the group of three values whose median is $\lambda$. These values are labeled in ascending order as $d_1 \leq d_2 \leq d_3$. It is noted that these three values had been sorted in the prior sorting operations. Additionally, since $d_2$ is the median of the group, it has the same value as $\lambda$. It can be shown that both $d_1$ and $d_2$ can be removed from the nine points. Now label the three values having $\gamma$ as its median in ascending order as $f_1 \leq f_2 \leq f_3$. Again, it is noted that $f_2$ has the same value as $\gamma$. It can be shown that the values $f_2$

and $f_3$ can be removed from the nine points. Thus, leaving five points including $d_3$, $f_1$ and a group of three values having $\beta$ as its median that is labeled in ascending order as $e_1 \leq e_2 \leq e_3$. These remaining five values are divided into two groups and further sorted. One group includes $d_3$ and $e_1$ that after sorting via sorter 405 are labeled in ascending order as $g_1 \leq g_2$. This sorting requires only one comparison. The second group includes $e_2$, $e_3$ and $f_1$ that after sorting via sorter 406 are labeled in ascending order as $h_1 \leq h_2 \leq h_3$. This sorting only requires two comparisons because $e_2$ and $e_3$ have already been sorted. Of the remaining five values $g_1$, $g_2$, $h_1$, $h_2$, and $h_3$, it can be shown that values $g_1$ and $h_3$ can be removed, leaving values $g_2$, $h_1$ and $h_2$. These remaining three values are sorted via sorter 407 and labeled in ascending order as $j_1 \leq j_2 \leq j_3$. This sorting takes only two comparisons because values $h_1$ and $h_2$ have already been sorted. The median value of the group from sorter 407 is the median of the nine points and is value $j_2$.

It should be noted that if so-called pipelining is used in the median filter 110, only one three point sorter is required for sorters 401, 402, 403 and 404 because the prior sorted results are stored for use in the subsequent sortings.

Moreover, the use of this unique spatial median filter 110 removes or reduces the effect of noise on the motion metric values without generating spurious "stillness" or motion. Furthermore, use of the spatial median filter in the invention enables the correct decision to be made regarding the motion state of an image rather than just providing a "fix" for erroneous decisions made in prior de-interlacing arrangements.

FIG. 5 is a graphical representation of a look up table including weights, i.e., blending factors, that may be used in the interpolation employed in the invention. In this example, the look up table is represented as a stretched sinusoidal curve, where $\alpha$ has 8-bit values. In certain applications, $\alpha$ may use fewer bits. It is noted that the curve shown in FIG. 5 has significant effects on the quality of the de-interlaced images. Shifting the curve to the left causes more pixels to be interpolated based on field, and therefore reducing aliasing. On the other hand, shifting the curve to the right may increase aliasing.

Thus, the look up table of FIG. 5 yields the weight, i.e., blending factor, $\alpha$ based on the supplied median motion metric $\Delta$ output from spatial median filter 110, namely, median value $j_2$. Then, the weights, i.e., blending factors, $\alpha$ are supplied to alpha ($\alpha$) blender 112. It should be noted that theoretically either the spatial median filter 110 or the look up table 111 could be applied first to the motion metric $\Delta$.

In one example the blending factors for given motion metrics are as follows:

| Motion Metric Value | Blending Factor |
| --- | --- |
| 0 | 0 |

(continued)

| Motion Metric Value | Blending Factor |
|---|---|
| 1 | 0 |
| 2 | 0 |
| 3 | 0 |
| 4 | 23/255 |
| 5 | 93/255 |
| 6 | 170/255 |
| 7 | 240/255 |
| 8 | 1 (255/255) |

In this example, any motion metric value of less than 4 yields a blending factor $\alpha$ of 0 and any motion metric value of 8 or more yields a blending factor $\alpha$ of 1.

As indicated above, the blending factors $\alpha$ from look up table 111 are supplied to alpha blender 112 where they are employed with the field based interpolation factor from unit 105 and the frame based interpolation factor from unit 106.

It has been observed, however, that alpha blending may not be required in all applications of the invention. In such situations a hard switch from frame based interpolation to field based interpolation is sufficient for practical results. When employing such hard switching from frame based interpolation to field based interpolation a much simplified spatial median filter can be used. This hard switching is readily accomplished by employing a controllable selector to select either the output from frame interpolator 106 when the image is still, e.g., a motion metric value of less than 4 in this example, or the output from field interpolator 105 when there is motion in the image, i.e., a motion metric value of 4 or more in this example.

It is noted that interpolation for chrominance is always field based.

The above-described embodiments are, of course, merely illustrative of the principles of the invention. Indeed, numerous other methods or apparatus may be devised by those skilled in the art without departing from the scope of the invention.

**Claims**

1. A method for use in a video image de-interlacer comprising the steps of:

   frame interpolating to yield a frame based luminance value for a missing pixel by using frame based interpolation;
   field interpolating to yield a field based luminance value for a missing pixel by using field based interpolation;
   obtaining luminance value differences of pixels in prescribed fields of an image in accordance with prescribed criteria;
   in response to prescribed ones of said luminance value differences, generating a motion metric value at a missing pixel;
   spatial median filtering at least three of said motion metric values to determine a median motion metric value; and
   controllably combining said frame based luminance value and said field based luminance value and in response to a representation of said median motion metric value controllably supplying as an output a luminance value for said missing pixel.

2. A method for use in a video image de-interlacer comprising the steps of:

   frame interpolating to yield a frame based luminance value for a missing pixel by using frame based interpolation;
   field interpolating to yield a field based luminance value for a missing pixel by using field based interpolation;
   obtaining luminance value differences of pixels in prescribed fields of an image in accordance with prescribed criteria;
   in response to prescribed ones of said luminance value differences, generating a motion metric value at a missing pixel;
   in response to supplied motion metric values, utilizing a look-up table including blending factor values related to said motion metric values to supply as an output corresponding blending factor values;
   spatial median filtering at least three of said blending factor values for determining a median blending factor value; and
   controllably combining said frame based luminance value and said field based luminance value and in response to said median blending factor value controllably supplying as an output a luminance value for said missing pixel.

3. The method as defined in claim 1 or claim 2 wherein said step of spatial median filtering employs a nine-value spatial median filter.

4. The method as defined in claim 1 wherein said step of combining, in response to said representation of said median motion metric value indicating the image is still, outputs said frame based luminance value and, in response to said representation of said median motion metric value indicating motion in the image, outputs said field based luminance value.

5. The method as defined in claim 4 wherein said step of frame interpolating includes a step of generating said frame based luminance value in accordance with $C_o = C_{-1}$, where $C_o$ is the luminance value of the missing pixel in field $f_o$ and $C_{-1}$ is the luminance value of a pixel corresponding to the missing pixel in a last prior field $f_{-1}$ relative to field $f_o$, and said step of field interpolating includes a step of generating said field based luminance value in accordance with $C_0 = \frac{(N_0 + S_0)}{2}$, where $N_0$ is the luminance value of a pixel above of and in the same field $f_o$ as the missing pixel, and $S_o$ is the luminance value of a pixel below of and in the same field $f_o$ as the missing pixel.

6. The method as defined in claim 2 wherein said step of combining includes a step, responsive to said median blending factor value indicating the image is still, of outputting said frame based luminance value, and a step, responsive to said median blending factor value indicating motion in the image, of outputting said field based luminance value.

7. The method as defined in claim 1 further including a step of employing a look-up table including blending factor values related to said median motion metric values and, in response to a supplied median motion metric value, supplying as an output a corresponding blending factor value as said representation of said median motion metric value.

8. The method as defined in claim 2 or claim 7 wherein said step of controllably combining, in response to said blending factor, supplying as an output a luminance value for said missing pixel in accordance with $C_0 = \alpha\frac{(N_0 + S_0)}{2}+(1-\alpha)C_{-1}$, where $C_0$ is the luminance value of the missing pixel in field $f_o$, $C_{-1}$ is the luminance value of a pixel corresponding to the missing pixel in a last prior field $f_{-1}$ relative to field $f_o$, $N_o$ is the luminance value of a pixel above of and inthe same field $f_o$ as the missing pixel, $S_o$ is the luminance value of a pixel below of and in the same field $f_o$ as the missing pixel and $\alpha$ is the blending factor.

9. The method as defined in claim 1 or claim 8 wherein said step of obtaining luminance value differences includes a step of generating a plurality of prescribed luminance value differences of pixels in prescribed fields of the image, and said step of generating a motion metric value includes a step of employing prescribed relationships of said luminance value differences to generate said motion metric value.

10. The method as defined in claim 9 wherein said step of obtaining luminance values differences includes a step of generating a first luminance difference value in accordance with $\Delta_c = |C_1\text{-}C_{-1}|$, where $C_{-1}$ is a luminance value of a pixel corresponding to the missing pixel in the last prior field $f_{-1}$ relative to a field $f_o$ including the missing pixel and $C_1$ is a luminance value of a pixel corresponding to the missing pixel in field $f_1$, and a step of generating at least a second luminance difference value in accordance with $\Delta_a = |\frac{(N_0 + S_0)}{2}\text{-}\frac{N_{-2} + S_{-2}}{2}|$, where $N_0$ is a luminance value of a pixel above of and in the same field $f_o$ as the missing pixel, $S_o$ is a luminance value of a pixel below of and in the same field $f_o$ as the missing pixel, $N_{-2}$ is a luminance value of a pixel above of the missing pixel and in the second prior field $f_{-2}$ relative to the field $f_o$ including the missing pixel and $S_{-2}$ is a luminance value of a pixel below of the missing pixel, and inthe second prior field $f_{-2}$ relative to the field $f_o$ including the missing pixel.

11. The method as defined in claim 10 wherein said step of generating a motion metric value includes a step of generating said motion metric value in accordance with $\Delta = \max(\triangle_c, \Delta_a)$, where $\Delta$ is said motion metric value.

12. The method as defined in claim 7 or claim 9 wherein said step of obtaining luminance value differences includes a step of generating a first luminance difference value in accordance with $\Delta_c = |C_1 \text{ - } C_{-1}|$, where $C_{-1}$ is a luminance value of a pixel corresponding to the missing pixel in the last prior field $f_{-1}$ relative to a field $f_o$ including the missing pixel and $C_1$ is a luminance value of a pixel corresponding to the missing pixel in field $f_1$, a step of generating a second luminance difference value in accordance with $\Delta_n = |N_o \text{ - } N_{-2}|$, where $N_o$ is a luminance value of a pixel above of and in the same field $f_o$ as the missing pixel and $N_{-2}$ is a luminance value of a pixel above of the missing pixel and in the second prior field $f_{-2}$ relative to the field $f_o$ including the missing pixel, and a step of generating at least a third luminance difference value in accordance with $\Delta_s = |S_0 \text{ - } S_{-2}|$, where $S_o$ is a luminance value of a pixel below of and in the same field $f_o$ as the missing pixel and $S_{-2}$ is a luminance value of a pixel below of the missing pixel and in the second prior field $f_{-2}$ relative to the field $f_o$ including the missing pixel.

13. The method as defined in claim 12 wherein said step of generating a motion metric value includes a step of generating said motion metric value in accordance with $\Delta = \max(\Delta_c, \min(\triangle_n, \triangle_s))$, where $\Delta$ is said motion metric value.

14. Apparatus for use in a video image de-interlace comprising means adapted to carry out each step of a method as claimed in any of the preceding claims.

FIG. 1

100

EP 1 139 659 A2

# FIG. 2

# FIG. 3

## FIG. 4

## FIG. 5